# EUROPEAN PATENT SPECIFICATION

(11) **EP 3 048 507 B1**
(45) Date of publication and mention of the grant of the patent: **26.06.2019**
(21) Application number: 15382010.5
(22) Date of filing: 22.01.2015
(51) Int. Cl.: G05G 1/44, F16B 9/02

(54) **Pedal assembly for motor vehicles**
Pedalanordnung für Fahrzeuge
Pedale pour vehicules

(43) Date of publication of application: 27.07.2016
(73) Proprietor: Batz, S.Coop., 48140 Igorre (ES)
(72) Inventor: Aguirre Pichel, Iñaki, 48980 SANTURTZI (ES)
(74) Representative: Igartua, Ismael

(56) References cited:
- DE-A1- 4 112 132
- DE-A1- 4 112 133
- DE-A1- 10 039 808
- US-A- 3 698 260
- US-B1- 6 446 525

## Description

### TECHNICAL FIELD

The present invention relates to pedal assemblies for motor vehicles.

### PRIOR ART

Pedal assemblies for motor vehicles, such as the assembly described in document DE10039808 A1, for example, comprising a support, at least one brake pedal and/or clutch pedal and/or gas pedal, and a coupling device which allows coupling the pedal to the support in a pivotable manner, are known. This coupling device comprises a first tube completely going through the pedal and supporting said pedal, a pair of bushings which allow coupling between said first tube and a second tube which is integral with or attached to the support, this second tube completely going through the pedal, and finally a shaft which is arranged going through the inside of the second tube and fixed to the outer walls of the support.

Other pedal assemblies have simplified the coupling device between the pedal and the support by eliminating parts, such as the pedal assembly described in patent document US2014/0116192 A1, for example, which comprises a support in the form of a hollow barrel, at least one pedal which comprises a lever for transmitting the force applied by the user on the pedal and surrounds the support, and a shaft which completely goes through the support and the lever of the pedal and allows coupling the walls of the support and the lever, the lever being coupled to the shaft about an axis of rotation.

In patent document DE102007059376 A1, the pedal assembly comprises a support divided into two parts coupled to one another, two pedals, each comprising a lever, each of them being coupled to the support inside a respective cavity, a first part of the support comprising an integral shaft protruding from one of the walls of said first part of the support, and the free end of the shaft being coupled to a wall of the second part of the support, the lever being coupled to the shaft about an axis of rotation.

US6446525B1 discloses a pedal assembly for motor vehicles according to the preamble of claim 1.

### DISCLOSURE OF THE INVENTION

The object of the invention is to provide a pedal assembly for motor vehicles as defined in the claims.

The pedal assembly of the invention comprises a support, at least one pedal comprising a lever pivoting with respect to said support about an axis of rotation. The support comprises holding means for holding the lever in a pivotable manner and the lever is coupled to the holding means by form fitting. The holding means comprise two shafts facing one another, the lever being coupled to said shafts.

The lever comprises two side walls, the shafts being coupled to the side walls, the side walls comprising respective holes centered in the axis of rotation, said holes allowing the passage of the shafts and the coupling thereof to the side walls by form fitting. The side walls comprise respective recessed zones surrounding offset holes by a specific radial angle, said offset holes being connected with the holes, and the axis of the offset holes being offset with respect to the axis of rotation, said recessed zones allowing the passage of one end of the shafts and the coupling thereof to the side walls by form fitting.

In pedal assemblies of the prior art, the pedal is coupled to the support by means of a coupling device formed by several parts, or directly by means of a shaft, which can be a separate part of the pedal and of the support, or it can be a part attached to the support, in which case the support is divided into two parts, the shaft being attached to a first part of the support, and the shaft being coupled to a second part of the support.

In the pedal assembly of the invention, given that the support itself incorporates holding means for holding the lever and said lever is fixed to the holding means by simple form fitting, the number of parts used is reduced. In addition to being more economically competitive, a simpler and more compact, more versatile and more lightweight pedal assembly is thereby obtained. On the other hand, the process of mounting and dismounting the pedal assembly is simplified and made easier, further contributing to cost reduction.

These and other advantages and features of the invention will become evident in view of the drawings and the detailed description of the invention.

### DESCRIPTION OF THE DRAWINGS

Figure 1 shows an exploded perspective view of an embodiment of the pedal assembly of the invention.
Figure 2 shows a plan view of the pedal assembly of Figure 1 mounted.
Figure 3 shows a detailed side view of the end of the lever of the pedal of the pedal assembly of Figure 1.
Figure 4 shows a detailed perspective view of a shaft of the pedal assembly of Figure 1.
Figure 5a shows a detailed section view according to line Va-Va of the shaft of Figure 4.
Figure 5b shows a detailed section view according to line Vb-Vb of the central body of the shaft of Figure 4.
Figure 6 shows a perspective view of the pedal of the pedal assembly of Figure 1 with the bushings mounted.
Figure 7a shows a first perspective view of the bushing of the pedal assembly of Figure 1.
Figure 7b shows a second perspective view of the bushing of the pedal assembly of Figure 1.
Figure 8 shows a detailed cross-section view according to line VIII-VIII of the pedal assembly of Figure 2.
Figures 9a-i show the steps of mounting the embodiment of Figure 1.

### DETAILED DISCLOSURE OF THE INVENTION

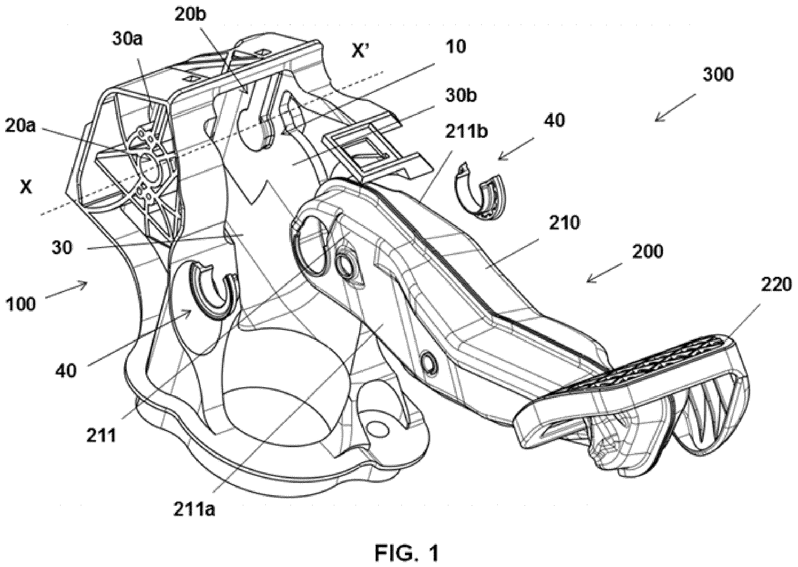

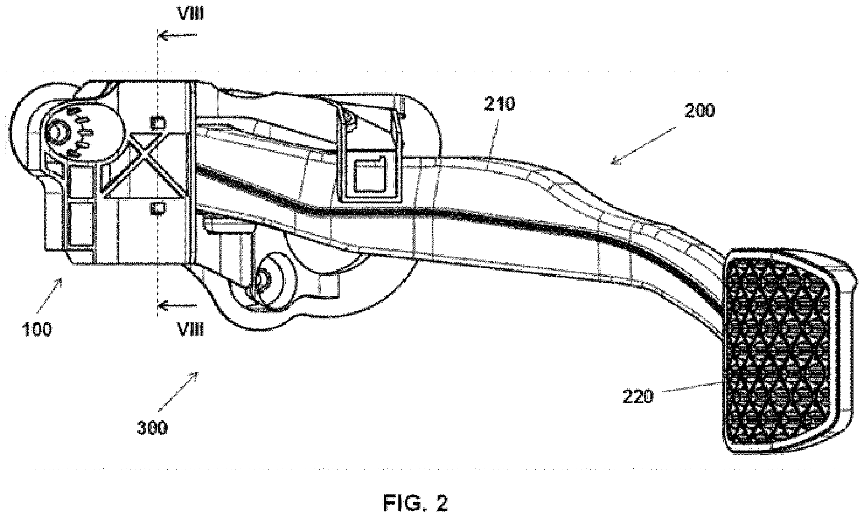

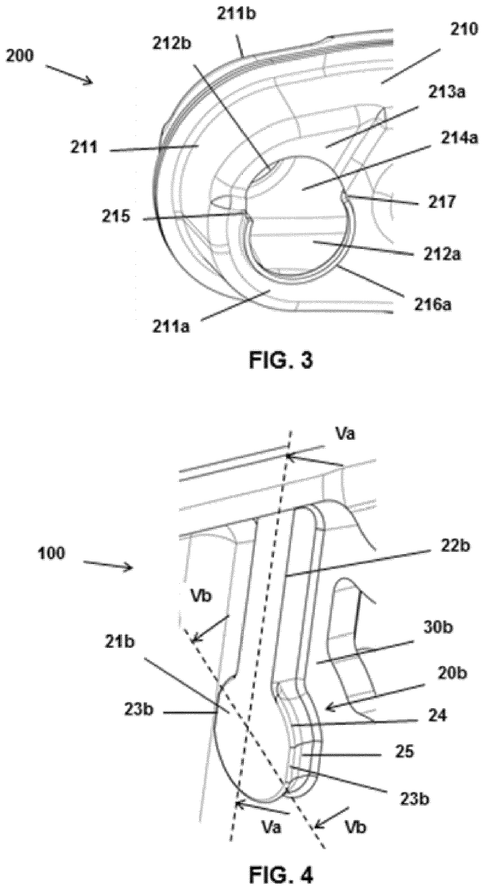

Figure 1 shows an exploded perspective view of an embodiment of a pedal assembly 300 for motor vehicles of the invention, Figure 2 shows a plan view of the pedal assembly 300 of Figure 1 mounted, and Figure 3 shows a detailed side view of the end 211 of the lever 210 of the pedal 200 of the pedal assembly 300 of Figure 1.

The pedal assembly 300 comprises a support 100, the lever 210 of the pedal 200 pivoting with respect to said support 100 about an axis of rotation XX'. The support 100 comprises holding means for holding the lever 210 in a pivotable manner, and the lever 210 is coupled to the holding means by form fitting. In this embodiment, the holding means comprise two shafts 20a, 20b facing one another, the lever 210 being coupled between said shafts 20a, 20b. On the other hand, in this embodiment the support 100 and the holding means are configured in a single part, thereby minimizing the number of parts.

The support 100 internally has a cavity 30 and is preferably manufactured from plastic by injection molding, although in other embodiments it could be manufactured from metal. In this embodiment, the pedal assembly 300 also comprises the brake pedal 200 which is introduced in the cavity 30 of the support 100. In other embodiments of the pedal assembly 300, the support 100, being a single part, can comprise several cavities in which other pedals of the motor vehicle are introduced, such as the clutch pedal and/or gas pedal (not shown in the drawings), for example. The pedal 200 of the pedal assembly 300 of the embodiment shown comprises the lever 210 with a tubular shape and a shoe 220 at one end on which the user applies force, the end 211 of the lever 210 of the pedal 200 being introduced in the cavity 30 of the support 100.

The two shafts 20a, 20b of the support 100 are two projections protruding respectively from two walls 30a, 30b of the cavity 30 of the support 100, the lever 210 being coupled to the shafts 20a, 20b about the axis of rotation XX'. The two shafts 20a, 20b are integral with the support 100, such that the two shafts 20a, 20b integrated with the support 100 are generated at the same time when manufacturing the support 100 by injection molding. In other embodiments of the pedal assembly 300 (not shown in the drawings), a single integrated shaft connecting two walls of said support is generated when manufacturing the support. Two shafts protruding from two walls of the support, respectively, can also be generated but with different lengths. When the lever 210 of the pedal 200 is coupled to a pedal assembly 300 as shown in Figures 1 and 2, being articulated in the shafts 20a, 20b, said shafts 20a, 20b do not completely go through the body of the lever 210, the pedal 200 being articulated in the support 100 through the shafts 20a, 20b in a pivotable manner about the axis of rotation XX'.

In this embodiment, the lever 210 is a hollow tubular body having a substantially quadrangular cross-section and manufactured from metal, comprising two side walls 211a, 211, the shafts 20a, 20b being coupled to the side walls 211a, 211b. In said coupling, as will be described below, said shafts 20a, 20b are barely introduced into the body of the lever 210, although in other embodiments (not shown in the drawings), the free ends of the shafts 20a, 20b can be introduced further into the body of the lever 210.

The side walls 211a, 211b respectively comprise at the end 211 of the lever 210 holes 212a, 212b going through said side walls 211a, 211b and communicating the outside of the lever 210 with the hollow interior of said lever 210. In this embodiment of the body of pedal 300, said holes 212a, 212b are centered in the axis of rotation XX'. The holes 212a, 212b allow the passage of the shafts 20a, 20b and the coupling thereof to the side walls 211a, 211b by form fitting, as will be described below. Likewise, the side walls 211a, 211b of the lever 210 respectively comprise recessed zones 213a, 213b reducing the width of the body of the lever 210. Since the lever 210 is manufactured from metal, these recessed zones 213a, 213b are obtained by press forming. Offset holes 214a, 214b communicating with the holes 212a, 212b at a specific radial angle are made in said recessed zones 213a, 213b. The holes 212a, 212b of the side walls 211a, 211b comprise, at the intersection thereof with the offset holes 214a, 214b, ends 215, 217 demarcating the position of both holes and therefore the intersection between the position of the side walls 211a, 211b and the recessed zones 213a, 213b. With this configuration of the holes 212a, 212b and the offset holes 214a, 214b, the axis of the offset holes 214a, 214b is offset with respect to the axis of rotation XX'. Said recessed zones 213a, 213b, together with the offset holes 214a, 214b, thereby allow the passage of the free end of the shafts 20a, 20b and the coupling thereof to the side walls 211a, 211b by form fitting when the pedal 200 is vertically mounted on the shafts 20a, 20b, as will be described below. In another embodiment of the pedal assembly (not shown in the drawings) in which it comprises a single shaft 20a, 20b, the offset holes 213a, 213b of the recessed zones 213a, 213b are not closed in the upper portion and are therefore open to the outside, which allows mounting the lever 210 of the pedal 200.

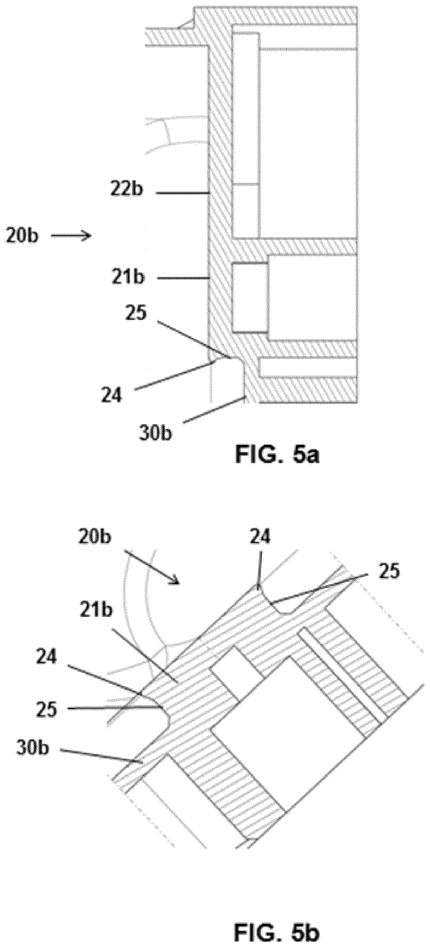

Figure 4 shows a detailed perspective view of the shaft 20b of the pedal assembly 300 of Figure 1, Figure 5a shows a detailed section view according to line Va-Va of shaft 20b of Figure 4, and Figure 5b shows a detailed section view according to line Vb-Vb of the central body 21b of the shaft 20b of Figure 4. Each of the shafts 20a, 20b respectively comprises a central body 21a, 21b having a substantially circular cross-section. In this embodiment, this substantially circular section comprises two planar zones 23a, 23b, respectively, for each of the shafts 20a, 20b, said planar zones 23a, 23b being located vertically when the support 100 is supported horizontally. The distance between the planar zones 23a, 23b of one and the same shaft 20a, 20b is therefore less than the diameter of the circular section of said shafts 20a, 20b, the circular portions below and above said planar zones 23a, 23b being concentric and of the same diameter.

The side walls 211a, 211b of the lever 210 of the pedal 200 respectively comprise flanges 216a, 216b protruding from the edge of the holes 212a, 212b towards the outside of the lever 210 in an orientation substantially orthogonal to the side walls 211a, 211b. In another embodiment of the pedal assembly 300 (not shown in the drawings), the flanges 216a, 216b protrude towards the inside of the body of the lever 210, the shafts 20a, 20b extending towards the inside of the body of the lever 210, and the press forming of the recessed zones 213a, 213b being of greater depth. In any of the embodiments, the ends 215, 217 of the holes 212a, 212b coincide with the ends of the flanges 216a, 216b.

In this embodiment of the pedal assembly 300, the shafts 20a, 20b also respectively comprise a side body 22a, 22b having a substantially rectangular cross-section which is prolonged vertically upwards with respect to the central body 21a, 21b of said shafts 20a, 20b. Both the central body 21a, 21b and the side body 22a, 22b respectively protrude from the walls 30a, 30b towards the inside of the cavity 30 of the support 100 and are located at the same height with respect to said walls 30a, 30b. The side body 22a, 22b forms a resistant section of the walls 30a, 30b and works at the same time as the central body 21a, 21b of the shafts 20a, 20b. Therefore, when the user steps on the pedal 200 and creates torque with the rod of the brake booster (not depicted in the drawings), said torque is transmitted to the support 100 and the resulting load is transmitted upwards through the shafts 20a, 20b in the walls 30a, 30b, the side body 22a, 22b of the shafts 20a, 20b providing resistance against said walls 30a, 30b opening.

The central body 21a, 21b of the shafts 20a, 20b further comprises a substantially concave perimetral zone 25 in the side area of the central body 21a, 21b protruding from the walls 30a, 30b of the support 100. This zone 25 of the central body 21a, 21b comprises a perimetral projection 24 at the free end of said zone 25, which is substantially orthogonal to the axis of rotation XX', allowing the zone 25 to be coupled to the shafts 20a, 20b with the flanges 216a, 216b of the lever 210 either in the embodiment shown or in the embodiment of the pedal assembly 300 in which the flanges 216a, 216b protrude towards the inside of the body of the lever 210 (not shown in the drawings).

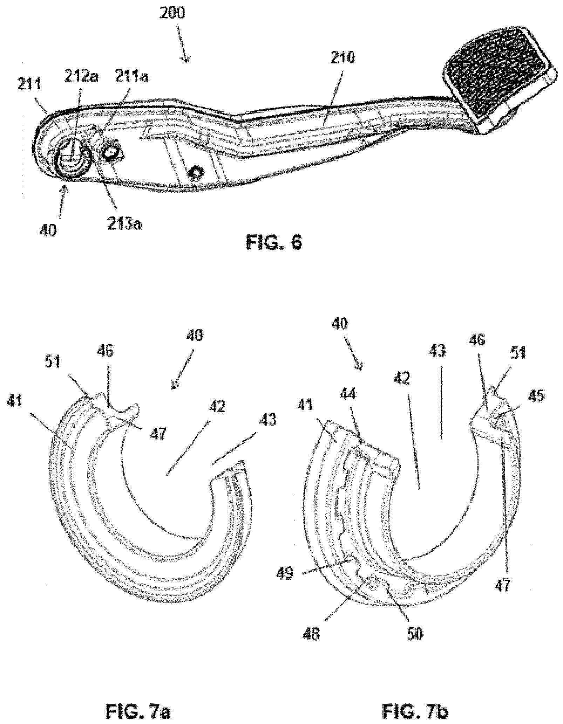

Figure 6 shows a perspective view of the pedal 200 of the pedal assembly 300 of Figure 1 with mounted bushings 40, Figure 7a shows a first perspective view of a bushing 40 of the pedal assembly 300 of Figure 1, and Figure 7b shows a second perspective view of a bushing 40 of the pedal assembly 300 of Figure 1.

In this embodiment, the pedal assembly 300 also comprises two bushings 40 mounted in the lever 210 of the pedal 200, said bushings 40 being manufactured from plastic in this embodiment, although they could be manufactured from other materials, the bushings 40 being coupled respectively to the flanges 216a, 216b of the side walls 211a, 211b by form fitting. The bushings 40 comprise an annular central body 41 with a central hole 42 going through it axially, the body 41 comprising a radial opening 43 on the perimeter thereof communicating with the central hole 42. The central hole 42 therefore communicates with the outside. Since the bushings 40 are coupled to the flanges 216a, 216b, the opening 43 communicates with the offset holes 214a, 214b of the recessed zones 213a, 213b of the side walls 211a, 211b, said opening 43 being suitable for allowing coupling of the shafts 20a, 20b to the respective bushings 40.

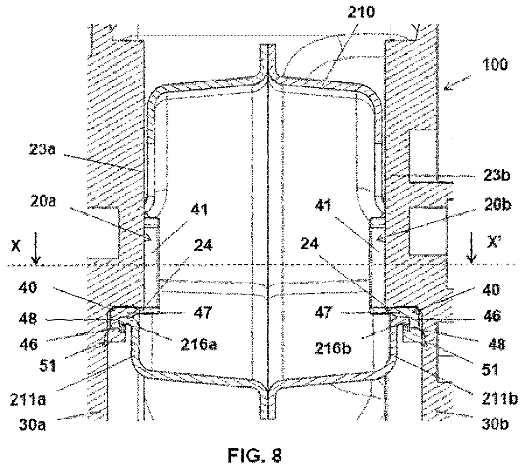

Figure 8 shows a detailed cross-section view according to line VIII-VIII of the pedal assembly 300 of Figure 2. The cross-section of the body 41 of the bushings 40 is a substantially L-shaped, said cross-section comprising a radial lip 46 which is substantially parallel to the side walls 211a, 211b of the lever 210 and to the walls 30a, 30b of the support 100, and the cross-section of the body 41 also comprises an axial lip 47 which is substantially parallel to the axis of rotation XX' of the lever 210 about the shafts 20a, 20b when the bushings 40 are housed in the flanges 216a, 216b of the side walls 211a, 211b of the lever 210.

To achieve suitable coupling, the radial lip 46 of the body 41 of the bushings 40 comprises a perimetral housing 48, which goes deeper in the direction of the axis of rotation XX' and runs along the entire perimeter of the body 41. Said housing 48 comprises a side 49 radially spaced from the other side of the housing 48, comprising retaining projections 50 arranged alternately along the perimeter of the housing 48. The bushings 40 each comprise stops 44, 45 which are arranged at the ends of the housing 48, with this configuration, when the bushings 40 are coupled to the flanges 216a, 216b, said housing 48 allowing said flanges 216a, 216b to be introduced in the housing 48 of the bushings 40 and to abut with the stops 44, 45 of said bushings 40. A fitted coupling of the flanges 216a, 216b is thereby achieved due to the retaining projections 50, allowing the lever 210 and bushings 40 to rotate in an integral manner.

Figure 8 shows the bushings 40 coupled to the flanges 216a, 216b of the lever 210 in the rest position, for the purpose of illustrating how said bushings 40 interfere with the walls 30a, 30b of the support 100 and with the shafts 20a, 20b, and thereby eliminating axial and radial backlashes between the lever 210 of the pedal 200 and the support 100. To achieve this, the radial lip 46 of the body 41 of the bushings 40 comprises an end 51 which is a thinner and narrower portion of the bushings 40, such that it can be bent more easily when pressed, and axially interferes with the walls 30a, 30b of the support 100 when the bushings 40 are housed in the lever 210, said end 51 pushing the walls 30a, 30b and thereby eliminating axial backlash between the lever 210 and the support 100.

Similarly, the radial lip 47 is also a thinner and narrower portion of the bushings 40, such that it can be bent more easily when pressed, the axial lip 47 radially interfering with the projection 24 of the zone 25 of the shafts 20a, 20b when the bushings 40 are housed in the lever 210, the axial lip 47 pushing the projection 24 and thereby eliminating radial backlash between the lever 210 and the support 100.

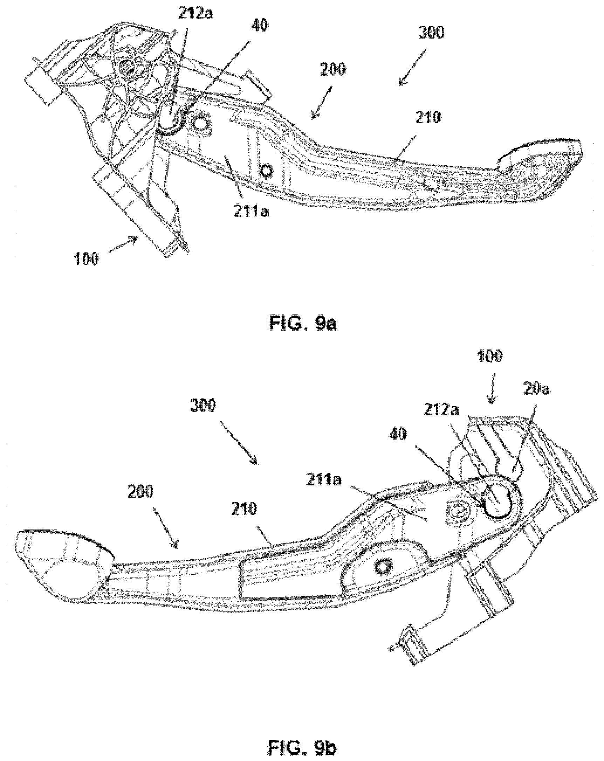

The method of the invention of mounting a pedal assembly 300 for motor vehicles is shown in Figures 9a-i. The pedal assembly 300 comprises a support 100 with a cavity 30 therein, a pedal 200 comprising a lever 210, and a shoe 220 at one end on which the user applies force F, one end 211 of the lever 210 of the pedal 200 being introduced in the cavity 30 of the support 100. The pedal assembly 300 also comprises two shafts 20a, 20b which are two projections protruding respectively from two walls 30a, 30b of the cavity 30 of the support 100, the lever 210 being coupled to the shafts 20a, 20b about an axis of rotation XX'. Each of the shafts 20a, 20b respectively comprises a central body 21a, 21b having a substantially circular cross-section. In this embodiment, this substantially circular section comprises two planar zones 23a, 23b, respectively, for each of the shafts 20a, 20b. The distance between the planar zones 23a, 23b of one and the same shaft 20a, 20b is therefore less than the diameter of the circular section of said shafts 20a, 20b, the circular portions below and above said planar zones 23a, 23b being concentric and of the same diameter.

The lever 210 comprises side walls 211a, 211b which in turn respectively comprise at the end 211 of the lever 210 holes 212a, 212b which go through said side walls 211a, 211b and are centered in the axis of rotation XX'. The holes 212a, 212b allow the passage of the shafts 20a, 20b and the coupling thereof to the side walls 211a, 211b by form fitting.

The pedal assembly 300 also comprises two bushings 40 which are mounted on the lever 210 of the pedal 200, the bushings 40 being coupled respectively to the holes 212a, 212b of the side walls 211a, 211b by form fitting. The bushings 40 comprise a central hole 42 going through them axially and a radial opening 43 on the perimeter thereof communicating with the central hole 42. The central hole 42 therefore communicates with the outside, the opening 43 being suitable for allowing coupling of the shafts 20a, 20b to the respective bushings 40.

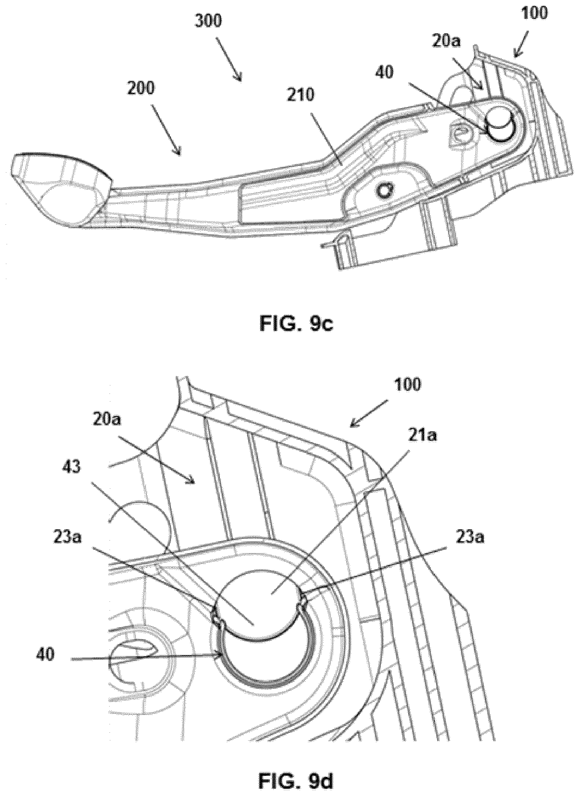

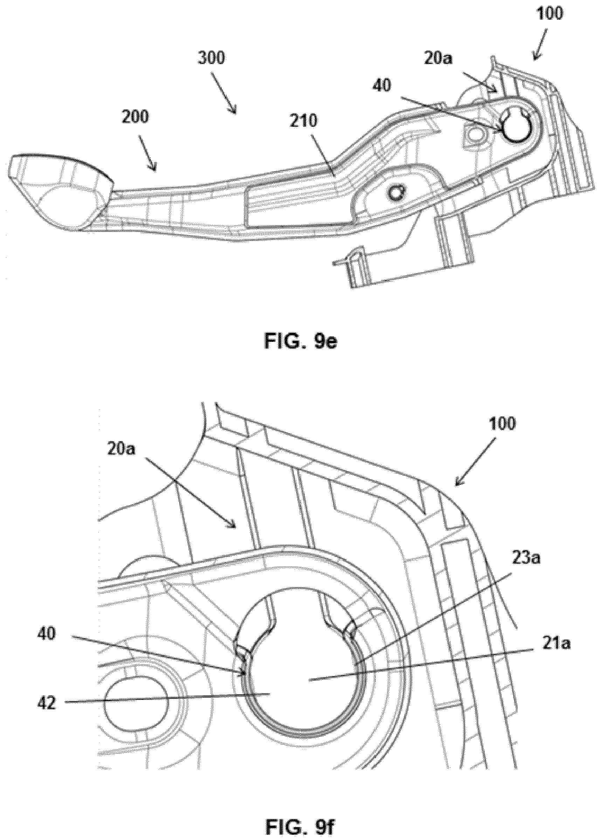

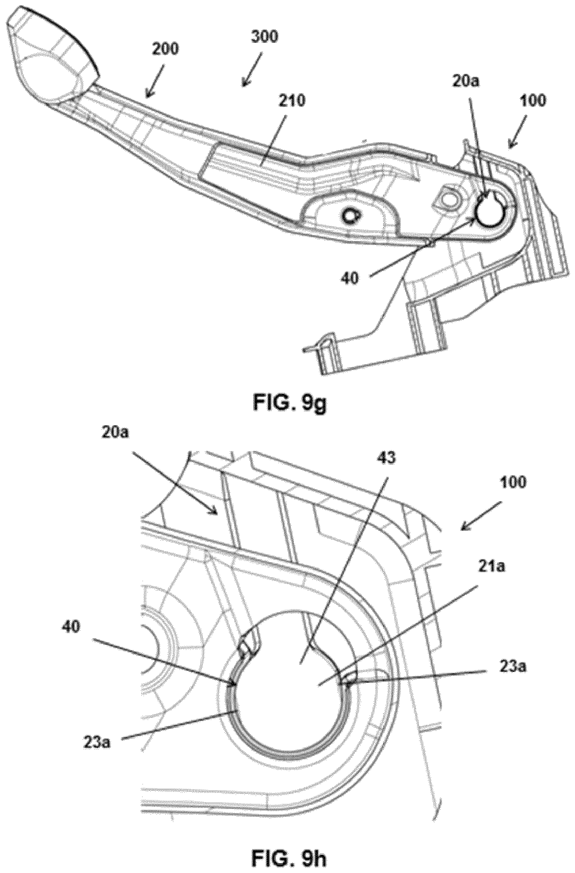

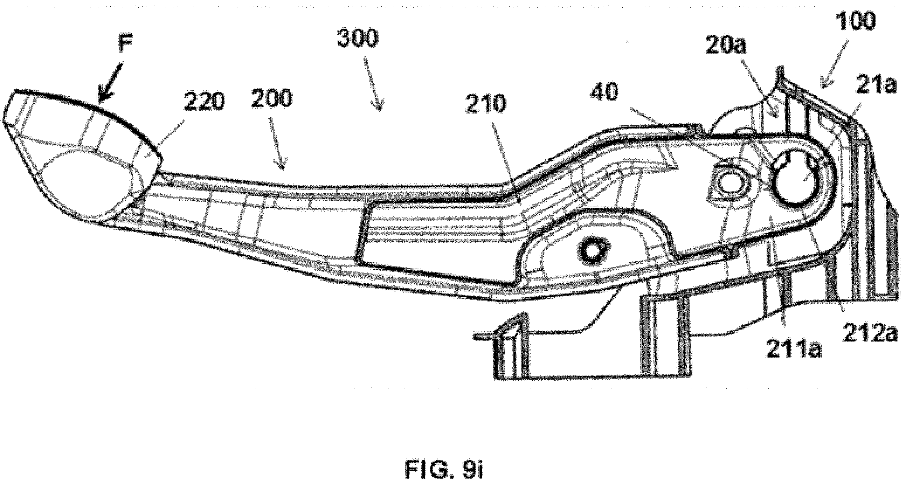

The method of mounting the pedal assembly 300 comprises:
- a step of mounting the bushings 40, in which the bushings 40 are mounted in the holes 212a, 212b of the side walls 211a, 211b of the lever 210 of the pedal 200, as shown in Figures 9a and 9b,
- a step of pre-mounting the pedal 200 in the support 100, in which the opening 43 of the bushings 40 is aligned with the planar zones 23a, 23b of the shafts 20a, 20b, as shown in Figures 9c and 9d,
- a step of mounting the pedal 200 in the support 100, in which the lever 210 of the pedal 200 is mounted in the shafts 20a, 20b, introducing the shafts 20a, 20b in the central hole 42 of the bushings 40, as shown in Figures 9e and 9f, and
- a step of positioning the pedal 200 in a rest position, in which the pedal 200 is rotated and the bushings 40 envelope the lower and upper portions of the central body 21a, 21b of the shafts 20a, 20b, the opening 43 of the bushings 40 not being aligned with the planar zones 23a, 23b of the shafts 20a, 20b in said rest position, as shown in Figures 9g, 9h and 9i. When the user uses said pedal 200 by stepping on the shoe 220 of the pedal 200 with force F, said pedal 200 is rotated between the rest position and a step-on position, not reaching the pre-mounting position for pre-mounting the pedal 200 in the support 100 in the step-on position, and therefore preventing decoupling of said pedal 200 from the shafts 20a, 20b, and therefore from the support 100.

## Claims

1. Pedal assembly for motor vehicles that comprises a support (100), at least one pedal (200) comprising a lever (210) pivoting with respect to said support (100) about an axis of rotation (XX'), the support (100) comprising holding means for holding the lever (210) in a pivotable manner, the lever (210) being coupled to the holding means by form fitting, wherein the holding means comprise two shafts (20a, 20b) facing one another, the lever (210) being coupled to said shafts (20a, 20b) and comprising two side walls (211a, 211b), **characterized in that** the shafts (20a, 20b) are coupled to the side walls (211a, 211b) of the lever (210), the side walls (211a, 211b) comprising respective holes (212a, 212b) centered in the axis of rotation (XX'), said holes (212a, 212b) allowing the passage of the shafts (20a, 20b) and the coupling thereof to the side walls (211a, 211b) by form fitting, the side walls (211a, 211b) comprising respective recessed zones (213a, 213b) surrounding offset holes (214a, 214b) by a specific radial angle, said offset holes (214a, 214b) being connected with the holes (212a, 212b), and the axis of the offset holes (214a, 214b) being offset with respect to the axis of rotation (XX'), said recessed zones (213a, 213b) allowing the passage of one end of the shafts (20a, 20b) and the coupling thereof to the side walls (211a, 211b) by form fitting.

2. Pedal assembly according to claim 1, wherein the support (100) and the holding means are configured in a single part.

3. Pedal assembly according to claim 1 or 2, wherein the shafts (20a, 20b) comprise a central body (21a, 21b) having a substantially circular cross-section with at least two planar zones (23a, 23b), and the holes (212a, 212b) comprise, at the intersection thereof with the offset holes (214a, 214b), ends (215, 217) allowing the passage of the planar zones (23a, 23b) when the shafts (20a, 20b) are coupled to the lever (210) of the pedal (200).

4. Pedal assembly according to claim 3, wherein the central body (21a, 21b) of the shafts (20a, 20b) comprises a perimetral zone (25) protruding from the walls (30a, 30b) of the support (100), the side walls (211a, 211b) of the lever (210) comprise respective flanges (216a, 216b) protruding from the edge of the holes (212a, 212b), and the shafts (20a, 20b) comprise a respective side body (22a, 22b) having a substantially rectangular cross-section, the zone (25) of the central body (21a, 21b) being coupled to the flanges (216a, 216b), the side body (22a, 22b) of the shafts (20a, 20b) preventing the opening of the walls (30a, 30b) of the support (100) when the applied force is transmitted from the pedal (200) to the support (100) through the shafts (20a, 20b).

5. Pedal assembly according to claim 4, comprising at least two bushings (40) that are coupled to the respective flanges (216a, 216b) of the side walls (211a, 211b) by form fitting, the bushings (40) comprising an annular body (41) with a central hole (42), the body (41) comprising a radial opening (43) communicating with the central hole (42), the opening (43) defining an angle communicating with the angle determined by the recessed zones (213a, 213b) of the side walls (211a, 211b), being suitable to allow coupling the shafts (20a, 20b) to the respective bushings (40).

6. Pedal assembly according to claim 5, wherein the bushings (40) each comprise stops (44, 45) at each of the ends of the annular body (41), the ends of the flanges (216a, 216b) coinciding with the ends (215, 217) of the holes (212a, 212b), the ends of the flanges (216a, 216b) abutting with the stops (44, 45) of the respective bushings (40a, 40b), and allowing the lever (210) and bushings (40) to rotate in an integral manner.

7. Pedal assembly according to claim 6, wherein the cross-section of the body (41) of the bushings (40) is substantially L-shaped, said cross-section comprising a radial lip (46) substantially parallel to the side walls (211a, 211b) of the lever (210) and to the walls (30a, 30b) of the support (100), and an axial lip (47) substantially parallel to the axis of rotation (XX') when the bushings (40) are housed in the lever (210), the radial lip (46) comprising a perimetral housing (48) in the direction of the axis of rotation (XX') running along the perimeter thereof, and said housing (48) comprising a side (49) with retaining projections (50) arranged alternately along the perimeter of the housing (48), stops (44, 45) of the bushings (40) being arranged at the ends of the housing (48), said housing (48) allowing the fitted coupling of the flanges (216a, 216b) when the bushings (40) are housed in the lever (210).

8. Pedal assembly according to claim 7, wherein the radial lip (46) comprises an end (51) axially interfering with the walls (30a, 30b) of the support (100) when the bushings (40) are housed in the lever (210), pushing said end (51) to the walls (30a, 30b), eliminating axial backlash between the lever (210) and the support (100).

9. Pedal assembly according to claim 8, wherein the shafts (20a, 20b) comprise at the free end of the zone (25) of the central body (21a, 21b) a perimetral projection (24) substantially orthogonal to the axis of rotation (XX'), said projection (24) interfering with the axial lip (47) of the bushings (40) when said bushings (40) are housed in the lever (210), pushing the axial lip (47) to the projection (24), eliminating radial backlash between the lever (210) and the support (100).

10. Pedal assembly according to claim 9, wherein the bushings (40) and the support (100) are preferably made of plastic and the pedal (200) is preferably made of metal.

## Patentansprüche

1. Pedalanordnung für Kraftfahrzeuge, umfassend einen Trägerkörper (100), mindestens ein Pedal (200) mit einem Hebel (210), der relativ zu dem genannten Trägerkörper (100) um eine Drehachse (XX') schwenkbar ist, wobei der Trägerkörper (100) Haltemittel zum schwenkbaren Halten des Hebels (210) umfasst, wobei der Hebel (210) durch Formschluss mit den Haltemitteln verbunden ist, wobei die Haltemittel zwei sich gegenüberliegende Schäfte (20a, 20b) umfassen, wobei der Hebel (210) mit den genannten Schäften (20a, 20b) verbunden ist und zwei Seitenwände (211a, 211b) umfasst, **dadurch gekennzeichnet, dass** die Schäfte (20a, 20b) mit den Seitenwänden (211a, 211b) des Hebels (210) verbunden sind, wobei die Seitenwände (211a, 211b) jeweils Löcher (212a, 212b)) umfassen, die um die Drehachse (XX') zentriert sind, wobei die genannten Löcher (212a, 212b) den Durchtritt der Schäfte (20a, 20b) und deren Verbindung mit den Seitenwänden (211a, 211b) durch Formschluss ermöglichen, wobei die Seitenwände (211a, 211b) jeweils vertiefte Bereiche (213a, 213b) umfassen, die versetzte Löcher (214a, 214b) in einem bestimmten radialen Winkel umgeben, wobei die genannten versetzten Löcher (214a, 214b) mit den Löchern (212a, 212b) verbunden sind und die Achse der versetzten Löcher (214a, 214b) relativ zur Drehachse (XX') versetzt ist, wobei die genannten vertieften Bereiche (213a, 213b) den Durchtritt eines Endes der Schäfte (20a, 20b) und deren Verbindung mit den Seitenwänden (211a, 211b) durch Formschluss ermöglichen.

2. Pedalanordnung nach Anspruch 1, wobei der Trägerkörper (100) und die Haltemittel als einteiliges Ganzes ausgeführt sind.

3. Pedalanordnung nach Anspruch 1 oder 2, wobei die Schäfte (20a, 20b) einen Mittelkörper (21a, 21b) mit einem im Wesentlichen kreisförmigen Querschnitt mit mindestens zwei Planarbereichen (23a, 23b) umfassen, und die Löcher (212a, 212b) an ihrem Schnittpunkt mit den versetzten Löchern (214a, 214b) Enden (215, 217) umfassen, die den Durchtritt der Planarbereiche (23a, 23b) ermöglichen, wenn die Schäfte (20a, 20b) mit dem Hebel (210) des Pedals (200) verbunden sind.

4. Pedalanordnung nach Anspruch 3, wobei der Mittelkörper (21a, 21b) der Schäfte (20a, 20b) einen aus den Wänden (30a, 30b) des Trägerkörpers (100) vorspringenden Perimeterbereich (25) umfasst, wobei die Seitenwände (211a, 211b) des Hebels (210) jeweils Flansche (216a, 216b) umfassen, die vom Rand der Löcher (212a, 212b) vorstehen, und die Schäfte (20a, 20b) jeweils einen Seitenkörper (22a, 22b) mit einem im Wesentlichen rechteckigen Querschnitt umfassen, wobei der Bereich (25) des Mittelkörpers (21a, 21b) mit den Flanschen (216a, 216b) verbunden ist, wobei der Seitenkörper (22a, 22b) der Schäfte (20a, 20b) verhindert, dass sich die Wände (30a, 30b) des Trägerkörpers (100) öffnen, wenn die ausgeübte Kraft durch die Schäfte (20a, 20b) vom Pedal (200) auf den Trägerkörper (100) übertragen wird..

5. Pedalanordnung nach Anspruch 4, umfassend mindestens zwei Buchsen (40), die durch Formschluss mit den jeweiligen Flanschen (216a, 216b) der Seitenwände (211a, 211b) verbunden sind, wobei die Buchsen (40) einen ringförmigen Körper (41) mit einer mittigen Bohrung (42) umfassen, wobei der Körper (41) eine radiale Öffnung (43) aufweist, die mit der mittigen Bohrung (42) in Verbindung steht, wobei die Öffnung (43) einen Winkel bildet, der mit dem durch die vertieften Bereiche (213a, 213b) der Seitenwände (211a, 211b) gebildeten Winkel in Verbindung steht und geeignet ist, die Verbindung der Schäfte (20a, 20b) mit den jeweiligen Buchsen (40) zu ermöglichen.

6. Pedalanordnung nach Anspruch 5, wobei die Buchsen (40) jeweils Anschläge (44, 45) an den einzelnen Enden des ringförmigen Körpers (41) aufweisen, wobei die Enden der Flansche (216a, 216b) mit den Enden (215, 217) der Löcher (212a, 212b) übereinstimmen, wobei die Enden der Flansche (216a, 216b) an den Anschlägen (44, 45) der jeweiligen Buchsen (40a, 40b) anliegen und eine integrale Drehung des Hebels (210) und der Buchsen (40) ermöglichen.

7. Pedalanordnung nach Anspruch 6, wobei der Querschnitt des Körpers (41) der Buchsen (40) im Wesentlichen L-förmig ist, wobei der genannte Querschnitt umfasst: eine radiale Lippe (46), die im Wesentlichen parallel zu den Seitenwänden (211a, 211b) des Hebels (210) und den Wänden (30a, 30b) des Trägerkörpers (100) ist, und eine axiale Lippe (47), die im Wesentlichen parallel zur Drehachse (XX') ist, wenn die Buchsen (40) im Hebel (210) angeordnet sind, wobei die radiale Lippe (46) ein umlaufendes Gehäuse (48) in Richtung der Drehachse (XX') umfasst, das entlang des Umfangs derselben verläuft, und wobei das genannte Gehäuse (48) eine Seite (49) mit abwechselnd entlang des Umfangs des Gehäuses (48) angeordneten Haltevorsprüngen (50) umfasst, wobei Anschläge (44, 45) der Buchsen (40) an den Enden des Gehäuses (48) angeordnet sind, wobei das genannte Gehäuse (48) die Passverbindung der Flansche (216a, 216b) ermöglicht, wenn die Buchsen (40) im Hebel (210) angeordnet sind.

8. Pedalanordnung nach Anspruch 7, wobei die radiale Lippe (46) ein Ende (51) umfasst, das axial mit den Wänden (30a, 30b) des Trägerkörpers (100) interferiert, wenn die Buchsen (40) im Hebel (210) angeordnet sind, wobei das genannte Ende (51) gegen die Wände (30a, 30b) gedrückt und das axiale Spiel zwischen dem Hebel (210) und dem Trägerkörper (100) aufgehoben wird.

9. Pedalanordnung nach Anspruch 8, wobei die Schäfte (20a, 20b) am freien Ende des Bereichs (25) des Mittelkörpers (21a, 21b) einen umlaufenden Vorsprung (24) aufweisen, der im Wesentlichen orthogonal zur Drehachse (XX') verläuft, wobei der genannte Vorsprung (24) mit der axialen Lippe (47) der Buchsen (40) interferiert, wenn die genannten Buchsen (40) im Hebel (210) angeordnet sind, wobei die axiale Lippe (47) zum Vorsprung (24) gedrückt und das radiale Spiel zwischen dem Hebel (210) und dem Trägerkörper (100) aufgehoben wird.

10. Pedalanordnung nach Anspruch 9, wobei die Buchsen (40) und der Trägerkörper (100) vorzugsweise aus Kunststoff und das Pedal (200) vorzugsweise aus Metall bestehen.

## Revendications

1. Ensemble de pédale pour véhicules automobiles comprenant un support (100), au moins une pédale (200) comprenant un levier (210) pivotant par rapport audit support (100) autour d'un axe de rotation (XX'), le support (100) comprenant des moyens de maintien pour maintenir le levier (210) de manière pivotante, le levier (210) étant couplé aux moyens de maintien par ajustement de forme, dans lequel les moyens de retenue comprennent deux arbres (20a, 20b) se faisant face, le levier (210) étant couplé auxdits arbres (20a, 20b) et comprenant deux parois latérales (211a, 211b), **caractérisé en ce que** les arbres (20a, 20b) sont couplés aux parois latérales (211a, 211b) du levier (210), les parois latérales (211a, 211b) comprenant des trous respectifs (212a, 212b) centrés dans l'axe de rotation (XX'), lesdits trous (212a, 212b) permettant le passage des arbres (20a, 20b) et leur accouplement aux parois latérales (211a, 211b) par ajustement de forme, les parois latérales (211a, 211b) comprenant des zones respectives en retrait (213a, 213b) entourant des trous décalés (214a, 214b) par un angle radial spécifique, lesdits trous décalés (214a, 214b) étant reliés aux trous (212a, 212b), et l'axe des trous décalés (214a, 214b) étant décalé par rapport à l'axe de rotation (XX'), lesdites zones en retrait (213a, 213b) permettant le passage d'une extrémité des arbres (20a, 20b) et leur accouplement aux parois latérales (211a, 211b) par ajustement de forme.

2. Ensemble de pédale selon la revendication 1, dans lequel le support (100) et le moyen de maintien sont configurés en une seule pièce.

3. Ensemble de pédale selon la revendication 1 ou 2, dans lequel les arbres (20a, 20b) comprennent un corps central (21a, 21b) ayant une section transversale sensiblement circulaire avec au moins deux zones planes (23a, 23b), et les trous (212a, 212b) comprennent, à leur intersection avec les trous décalés (214a, 214b), des extrémités (215, 217) permettant le passage des zones planes (23a, 23b) lorsque les arbres (20a, 20b) sont couplés au levier (210) de la pédale (200).

4. Ensemble de pédale selon la revendication 3, dans lequel le corps central (21a, 21b) des arbres (20a, 20b) comprend une zone périmétrale (25) dépassant des parois (30a, 30b) du support (100), les parois latérales (211a, 211b) du levier (210) comprennent des brides respectives (216a, 216b) dépassant du bord des trous (212a, 212b) et les arbres (20a, 20b) comprennent un corps latéral respectif (22a), 22b) ayant une section transversale sensiblement rectangulaire, la zone (25) du corps central (21a, 21b) étant couplée aux brides (216a, 216b), le corps latéral (22a, 22b) des arbres (20a, 20b) empêchant l'ouverture des parois (30a, 30b) du support (100) lorsque la force appliquée est transmise de la pédale (200) au support (100) par les arbres (20a, 20b).

5. Ensemble de pédale selon la revendication 4, comprenant au moins deux bagues (40) qui sont couplées aux brides respectives (216a, 216b) des parois latérales (211a, 211b) par ajustement de forme, les bagues (40) comprenant un corps annulaire (41) avec un trou central (42), le corps (41) comprenant une ouverture radiale (43) communiquant avec le trou central (42), l'ouverture (43) définissant un angle communiquant avec l'angle déterminé par les zones en retrait (213a, 213b) des parois latérales (211a, 211b), étant adaptée pour permettre le couplage des arbres (20a, 20b) aux bagues respectives (40).

6. Ensemble de pédale selon la revendication 5, dans lequel les bagues (40) comprennent chacune des butées (44, 45) à chacune des extrémités du corps annulaire (41), les extrémités des brides (216a, 216b) coïncidant avec les extrémités (215, 217) des trous (212a, 212b), les extrémités des brides (216a, 216b) venant en butée contre les butées (44, 45) des bagues respectives (40a, 40b), et permettant au levier (210) et aux bagues (40) de tourner de manière solidaire.

7. Ensemble de pédale selon la revendication 6, dans lequel la section transversale du corps (41) des bagues (40) est sensiblement en forme de L, ladite section transversale comprenant une lèvre radiale (46) sensiblement parallèle aux parois latérales (211a, 211b) du levier (210) et aux parois (30a, 30b) du support (100) et une lèvre axiale (47) sensiblement parallèle à l'axe de rotation (XX') lorsque les bagues (40) sont logées dans le levier (210), la lèvre radiale (46) comprenant un logement périmétral (48) dans la direction de l'axe de rotation (XX') s'étendant le long de son périmètre, et ledit logement (48) comprenant un côté (49) avec des saillies de retenue (50) disposées alternativement le long du périmètre du logement (48), des butées (44, 45) des bagues (40) étant disposées aux extrémités du logement (48), ledit logement (48) permettant le couplage ajusté des brides (216a, 216b) lorsque les bagues (40) sont logées dans le levier (210).

8. Ensemble de pédale selon la revendication 7, dans lequel la lèvre radiale (46) comprend une extrémité (51) interférant axialement avec les parois (30a, 30b) du support (100) lorsque les bagues (40) sont logées dans le levier (210), poussant ladite extrémité (51) vers les parois (30a, 30b), éliminant le jeu axial entre le levier (210) et le support (100).

9. Ensemble de pédale selon la revendication 8, dans lequel les arbres (20a, 20b) comprennent à l'extrémité libre de la zone (25) du corps central (21a, 21b) une saillie périmétrale (24) sensiblement orthogonale à l'axe de rotation (XX'), ladite saillie (24) interférant avec la lèvre axiale (47) des bagues (40) lorsque lesdites bagues (40) sont logées dans le levier (210), poussant la lèvre axiale (47) vers la saillie (24), éliminant le jeu radial entre le levier (210) et le support (100).

10. Ensemble de pédale selon la revendication 9, dans lequel les bagues (40) et le support (100) sont de préférence en matière plastique et la pédale (200) est de préférence en métal.
